# EUROPÄISCHE PATENTSCHRIFT

(11) **EP 0 871 581 B1**
(45) Veröffentlichungstag und Bekanntmachung des Hinweises auf die Patenterteilung: **16.08.2000**
(21) Anmeldenummer: 96946226.6
(22) Anmeldetag: 20.12.1996
(51) Int. Cl.: B61F 5/32, B61F 5/52, B60G 11/04

(54) **ZWEIACHSIGES SCHIENENFAHRZEUG-DREHGESTELL**
TWIN-AXLE RAIL VEHICLE BOGIE
BOGIE DE VEHICULE FERROVIAIRE A DEUX ESSIEUX

(30) Priorität: 22.12.1995 DE 19548437
(43) Veröffentlichungstag der Anmeldung: 21.10.1998
(73) Patentinhaber: Newag GmbH & Co. Kg. Maschinen-, Apparate- und Gerätebau, 46117 Oberhausen (DE)
(72) Erfinder: KERN, Werner, D-34308 Bad Emstal (DE)
(74) Vertreter: Viering, Jentschura & Partner
(86) Internationale Anmeldenummer: DE9602495
(87) Internationale Veröffentlichungsnummer: WO9723375

(56) Entgegenhaltungen:
- DE-A- 4 136 926
- DE-B- 1 009 220
- DE-B- 1 106 359
- FR-A- 1 159 339
- US-A- 2 427 066
- US-A- 2 981 207

## Beschreibung

Die Erfindung betrifft ein zweiachsiges Schienenfahrzeug-Drehgestell nach dem Oberbegriff des Patentanspruchs 1.

Es sind herkömmliche Drehgestelle bekannt, bei welchen ein Drehgestell-Rahmen vorgesehen ist, der einen Querträger aufweist, welcher sich quer zur Fahrtrichtung erstreckt, sowie Längsträger aufweist, welche an dem Querträger angebracht sind und sich in Fahrtrichtung erstrecken. Der Querträger trägt mittig üblicherweise einen Drehschemel, mittels welchem das Drehgestell an der Fahrzeug-Unterseite um die Hochachse schwenkbar angebracht ist. Die beiden Radsätze sind außen an einer Hauptfederanordnung angelenkt, deren Federkraft im wesentlichen in Vertikalrichtung gerichtet ist. Das obere, freie Ende der Federanordnung ist üblicherweise an den Längsträger angelenkt. Weiter ist der Radsatz mittels Längslenkern zum Übertragen von Längskräften an den Drehgestell-Rahmen angelenkt. Um eine geeignete Steifigkeit des Drehgestell-Rahmens zu erreichen, waren herkömmlicherweise die Längsträger an ihren äußeren, freien Enden durch weitere Querträger miteinander verbunden, so daß ein in sich geschlossener Rahmen verwendet wurde.

Für bestimmte Sonderfahrzeuge war es jedoch wünschenswert, die Drehgestelle möglichst kompakt und mit niedrigem Gewicht zu bauen, sowie mit besonders niedriger Bauhöhe. Dazu war es wünschenswert, kleinere Raddurchmesser zu verwenden, was seinerseits Probleme mit der Entgleisungssicherheit mit sich brachte. Deshalb mußte eine sehr große statische Radsatzeinfederungstiefe in Verbindung mit einer hydraulischen Schwingungsdämpfung realisiert werden. Entsprechend groß mußte daher die Hauptfederanordnung ausgebildet sein, welche sich in Vertikalrichtung erstreckte. Dies hatte seinerseits zur Folge, daß die Bauhöhe unerwünscht groß wurde. Andererseits hatte der herkömmliche Drehgestell-Rahmen mit den Längsträgern ein relativ hohes Gewicht, als auch große Baumaße, was sich auch dadurch erklärt, daß die Längsträger sich bei den herkömmlichen Drehgestell-Rahmen über dem Rad erstrecken mußten, um die Federn aufnehmen zu können.

Weiter ist aus der DE-AS 24 44 887 ein gattungsgemäßes Drehgestell für Schienenfahrzeuge bekannt, wobei eine Schwinge mit ihrem einen freien Ende an einen Drehgestell-Querträger angelenkt ist, und an ihrem anderen freien Ende das Radsatzlager trägt. Die Federung erfolgt über Blattfedern, welche unterhalb der Schwinge verlaufen.

Im Schienenfahrzeugbau ist auch die Anwendung von balgförmigen Gasfedern bekannt. Es ist auch bekannt, torusförmige Gasfedern zwischen zwei sich gegenseitig verschiebenden Teilen zu benutzen. Darüber hinaus ist auch bekannt, bei Drehgestellen zur Vermeidung der Drehgestellwiege den Wagenkasten über als Gummikugeln ausgebildete Verschiebeglieder auf dem Drehgestellrahmen seitlich zu lagern. Schließlich ist ein Drehgestell bekannt, bei dem biegesteife, winkelhebelartig ausgebildete Schwingarme an ihren Scheiteln drehbar an einem Querträger gelagert sind. Der Querträger vertritt den sonst üblichen Drehgestellrahmen und ist gegenüber dem Wagenkasten horizontal geführt. Als Weiterentwicklung beschreibt die DE-AS-1 106 359 die Anwendung eines über dem Querträger angeordneten Zwischenträgers, der sich auf Gasfedern abstützt und beiderseits je eine seitliche Abstützung von dem Wagenkasten trägt, wobei der Querträger mittels räumlich schwingender Pendel am Wagenkasten oder am Zwischenträger aufgehängt ist. Der bei den im Stand der Technik bekannten Systemen erzielte Federungskomfort bzw. Fahrsicherheit läßt jedoch zu wünschen übrig.

Der Erfindung liegt die Aufgabe zugrunde, ein zweiachsiges Schienenfahrzeug-Drehgestell der eingangs erwähnten Art zu schaffen, welches bei großer Entgleisungssicherheit ein möglichst kleines Baumaß und Gewicht, insbesondere eine geringe Bauhöhe aufweist.

Dies wird erfindungsgemäß durch die Merkmale im kennzeichnenden Teil des Anspruchs 1 erreicht. Vorteilhafte Weiterbildungen sind in den Unteransprüchen beschrieben.

In anderen Worten ausgedrückt, wird erfindungsgemäß der herkömmliche Drehgestell-Längsträger auf jeder Drehgestell-Längsseite jeweils durch eine erste und eine zweite Schwinge ersetzt. An diesen Schwingen sind einerseits die Radsatz-Wellenlagerungen, die vorteilhaft aus Wälzlagern in Stehlagergehäusen bestehen können, angeschraubt, andererseits sind die beiden Schwingen an je einer Drehgestellseite gemeinsam an dem Drehgestell-Querträger befestigt, so daß sie gegeneinander schwingen können. Dadurch werden die Kräfte von den Schienen-Radaufstandspunkten über die Stehlager in die Schwingen eingeleitet, welche sich ihrerseits über ein zwischen die Schwingen eingebautes Federungssystem gegenseitig abstützen.

Auf diese Weise wird erreicht, daß trotz sehr geringer Bauhöhe eine sehr große Radsatzeinfederungstiefe gewährleistet werden kann und somit eine hohe Sicherheit gegen Entgleisen gewährleistet ist. Zusätzlich wird durch die Vereinfachung des Drehgestell-Rahmens eine Gewichtsreduzierung erreicht. Weiter wird ein geringer Achsabstand erreicht. Deshalb eignen sich die erfindungsgemäßen Drehgestelle besonders zum Transportieren von hochbauenden Lasten, ohne das zulässige Fahrzeug-Umgrenzungsprofil zu überschreiten, also für Eisenbahnfahrzeuge mit niedriger Flurbodenhöhe. Beispiele für derartige Drehgestelle sind Drehschemel-Drehgestelle für Sondertransporte wie Ladegüter mit Überlänge oder Einbau-Drehgestelle unter Sonderfahrgestellen.

Gemäß einer vorteilhaften Weiterbildung sind die erste und zweite Schwinge um einen gemeinsamen Lagerpunkt schwenkbar. Dadurch wird eine möglichst große Schwingenlänge bei einfacher Konstruktion erreicht. Gemäß einer anderen Ausführungsform sind die erste bzw. zweite Schwinge jeweils an unterschiedlichen Anlenkpunkten an den Drehgestell-Querträger angelenkt, wobei diese Anlenkpunkte in Fahrtrichtung im Abstand zueinander angeordnet sind.

Gemäß einer anderen vorteilhaften Ausführungsform sind die erste Schwinge und die zweite Schwinge einander identisch und beide Schwingen weisen in der Seitenansicht im wesentlichen die Form eines Winkels auf, dessen unterer, in dem ersten freien Ende endender Schenkel im wesentlichen horizontal verläuft und dessen oberer, in dem zweiten freien Ende endender Schenkel im wesentlichen vertikal verläuft, wobei das Radsatzlager im wesentlichen am Schnittpunkt der beiden Schenkel angeordnet ist. Hierdurch läßt sich eine besonders raumsparende Konstruktion verwirklichen, so daß wichtige Funktionselemente zwischen den oberen, vertikal verlaufenden Schenkeln untergebracht werden können.

Grundsätzlich müssen zu dem Zweck, die Federelemente oder das einzige Federelement zwischen den zweiten Enden der Schwingen unterzubringen, diese Schwingen nicht winkelförmig ausgebildet sein, aber dennoch zumindest einen Abschnitt aufweisen, welcher sich in vertikaler Richtung oberhalb der Radsatzachsen befindet. Die Wirkrichtung der Hauptfederanordnung muß nicht horizontal verlaufen. Jedoch ist die im wesentlichen horizontale Richtung hinsichtlich einer geringen Bauhöhe des gesamten Drehgestells optimal.

Gemäß einer anderen vorteilhaften Weiterbildung der Erfindung erstreckt sich je eine Hauptfederanordnung der ersten bzw. zweiten Schwinge ausgehend von dem jeweiligen zweiten freien Ende im wesentlichen in Horizontalrichtung, so daß beide Hauptfederanordnungen zwischen den zweiten freien Enden der einander benachbarten ersten bzw. zweiten Schwinge angeordnet sind. Auf diese Weise läßt sich die Federung besonders raumsparend unterbringen, und zugleich eine niedrige Bauhöhe realisieren.

Vorteilhaft kann auch nur eine einzige Hauptfederanordnung vorgesehen sein, die beispielsweise nur eine einzige Druckfeder aufweist, und zwischen den zweiten freien Enden der einander benachbarten ersten bzw. zweiten Schwinge angeordnet sind und diese freien Enden so miteinander verbindet.

Eine weitere Reduzierung der Bauhöhe läßt sich gemäß einer vorteilhaften Weiterbildung dadurch erzielen, daß der jeweilige Schwenkpunkt am ersten freien Ende der ersten, wie auch der zweiten Schwinge tiefer als die Radachse des ersten bzw. zweiten Radsatzes liegt.

Gemäß einer besonders vorteilhaften Weiterentwicklung der Erfindung ist neben der jeweiligen Hauptfederanordnung an jeder der Schwingen zusätzlich ein hydraulischer Federblockierzylinder angeordnet. Alternativ kann auch nur ein einziger Federblockierzylinder vorgesehen sein, welche sich im wesentlichen parallel zu der Hauptfederanordnung erstreckt und die beiden zweiten Enden der beiden Schwingen miteinander verbindet. In dem Zylinder befinden sich ein bzw. zwei darin verschiebbaren Kolben, sowie Ölanschlüssen auf beiden Zylinderseiten des Kolbens. Durch entsprechendes Einleiten von Öl in die Zylinderkammern auf beiden Seiten des Kolbens bis beide Zylinderkammern voll mit Öl aufgefüllt sind, und anschließendes Absperren der Ölzuführleitungen, läßt sich der Kolben in einer beliebig wählbaren Lage blockieren, und somit die jeweilige Schwinge hinsichtlich eines weiteren Einfederns blockieren, welche mit ihrem zweiten Ende an die Kolbenstange angelenkt ist. Für den Fall, daß zwei getrennte Kolben-Zylinder-Einheiten vorgesehen sind, können diese an den Drehgestell-Querträger angelenkt sein. Besonders vorteilhaft ist jedoch die Alternative mit nur einem einzigen Zylinder, in welchem sich zwei Kolben befinden. Durch Blockieren dieses einzigen Zylinders läßt sich ein weiteres Einfedern verhindern und damit ein übermäßiger Wankwinkel, beispielsweise aufgrund ungleichmäßiger Beladung. Dennoch bleibt das System dann schwingfähig und kann sich so an Bodenunebenheiten anpassen. Eine derartige Federblockiereinrichtung ist insbesondere bei hohen einseitigen Kranmomenten bzw. Arbeitsbühnenmomenten von Vorteil, wobei verhindert werden muß, daß aufgrund dieser Momente ein Wankwinkel zwischen dem Fahrzeug und dem Drehgestell durch einseitiges Einfedern auftritt. Gegebenenfalls muß das Fahrzeug aber auch unter Einwirkung von derartigen Momenten fahrfähig bleiben, wozu das System schwingfähig bleiben muß.

Wenn es auf eine mögliche Beschränkung des Wankwinkels nicht ankommt, kann anstatt eines Federblockierzylinders ein einfacher Dämpfungszylinder vorgesehen sein, der vorzugsweise hydraulisch arbeitet.

Gemäß einer erfindungsgemäßen Weiterbildung sind die hydraulischen Federblockierzylinder von ihrem Federblockier-Betriebsmodus auf einen Schwingungsdämpfungs-Betriebsmodus umschaltbar, wozu die Federblockierzylinder an eine externe Drossel angeschlossen sind. Diese Drossel kann verstellbar ausgebildet sein, um diese an die temperaturabhängige Viskosität des Hydrauliköls anpassen zu können.

Als eine zusätzliche Erfindung wurden so die Vorteile eines Federblockierzylinders mit den Vorteilen einer Schwingungsdämpfung kombiniert, ohne zusätzliche Schwingungsdämpfungszylinder vorsehen zu müssen. Durch die externe Anordnung der Drossel wird überdies erreicht, daß diese einstellbar gestaltet werden kann und an die temperaturabhängige Viskosität des Öls angepaßt werden kann. Durch eine derartige Schwingungsdämpfung wird eine weitere Sicherheit gegen Entgleisen bewirkt.

Das Drehgestell ist derart an das Fahrzeug angelenkt, daß es um einen Drehzapfen geschwenkt werden kann, also um die Hochachse gedreht werden kann. Weiter muß das Drehgestell einen, wenn auch kleinen, Wankwinkel relativ zu dem Fahrzeug zulassen, damit ein Einfahren in Kurven mit Kurvenüberhöhung ermöglicht wird, da in Fahrtrichtung im Abstand zueinander mehrere Drehgestelle an dem Fahrzeug angebracht sind und das zuerst in die Kurve einfahrende Drehgestell aufgrund der zunehmenden Kurvenüberhöhung einen Wankwinkel zulassen muß, insbesondere wenn der Fahrzeugkörper besonders torsionssteif ist. Insbesondere bei Sonderfahrzeugen mit Hebekränen oder Arbeitsbühnen muß jedoch das Wanken unterbunden werden. Dazu können zusätzlich Wankstützen vorgesehen sein, welche den Wankwinkel des Drehgestells relativ zu dem Fahrzeug auf einen bestimmten Winkel, beispielsweise 2° begrenzen.

Gemäß einer anderen vorteilhaften Weiterbildung der Erfindung weisen die Hauptfederanordnungen Elastomerfedern auf, beispielsweise aus Hartgummi. Ebenso können vorteilhaft die Hauptfederanordnungen mit einem Satz von Tellerfedern versehen sein. Ebenso ist es jedoch möglich, eine Schrauben-Druckfeder zu verwenden.

Vorteilhaft sind die Hauptfederanordnungen für verschiedene Achslasten austauschbar und weisen alle die gleiche Einbaulänge unter spezifischer statischer Belastung auf. Damit kann das jeweils gewünschte Drehgestell baukastenartig je nach gewünschtem Verwendungszweck, beispielsweise je nach gewünschter Achslast, zusammengestellt werden oder auch umgerüstet werden. Entsprechend können zusätzlich die Naben der Räder mittels keilförmig klemmender Verbindungselemente derart mit den Radsatzwellen verbunden sein, daß ein Verändern der Lage der Räder auf den Radsatzwellen einen Umbau der Drehgestelle auf andere Spurweiten innerhalb kurzer Zeit ermöglicht.

Vorteilhaft ist das erfindungsgemäße Drehgestell derart weitergebildet, daß die Hauptfederanordnungen schwingenseitig an Hauptfederanordnungs-Tragplatten befestigt sind, die Hauptfederanordnungen der ersten und zweiten Schwinge horizontal und koaxial zueinander angeordnet sind und jede der Federanordnungen auf einer Führungssäule ausknicksicher geführt ist, welche in den Hauptfedersatz-Tragplatten gelagert ist, wobei die Führungssäule in ihrer Längsmitte einen Bund besitzt, mittels welchem die Führungssäule von den Hauptfederanordnungen getragen wird. Dadurch wird erreicht, daß die Hauptfederanordnungen, beispielsweise das Tellerfederpaket, nicht ausknicken können. Überdies wird eine günstige Montage der Federanordnungen mittels der Führungssäulen erreicht.

Gemäß einer vorteilhaften Weiterbildung ist das Drehgestell über einen Drehzapfen mittels Gleitscheibe, Deckscheibe, Mutter und Tragbolzen unter Sonderfahrzeugen anhebbar und transportierbar. Damit eignet sich das erfindungsgemäße Drehgestell für Lastkraftwagen im sogenannten 2-Wege-Betrieb, wobei das Drehgestell bei Straßenfahrt unter den Lastkraftwagen angehoben werden kann, während sich der Lastkraftwagen bei Schienenbetrieb auf den Drehgestellen abstützt. Um zusätzlich ein Einspuren in das Schienennetz zu erleichtern, kann mindestens eines der Drehgestelle des 2-Wege-Fahrzeugs mindestens 90° um einen vertikalen Drehzapfen geschwenkt werden. Für den Straßenbetrieb kann das Drehgestell vorteilhaft mittels eines hydraulischen Teleskoparms unter das Sonderfahrzeug gezogen werden.

Obgleich sich jeder beliebige Antrieb wie mittels eines Dieselmotors, welcher über ein Getriebe direkt einen der Radsätze antreibt, oder mittels eines dieselelektrischen oder dieselhydraulischen Antriebs, oder ein reiner Elektromotor, für den Antrieb eines der Radsätze eignet, hat es sich als vorteilhaft erwiesen, einen der beiden Radsätze mittels eines Hydrostatik-Motors anzutreiben, wobei der Motor als Radmotor oder als Achsgetriebemotor ausgebildet sein kann.

Vorteilhaft ist wenigstens einer der Radsätze mit einer Scheibenbremse versehen, was gegenüber einer prinzipiell ebenfalls möglichen Bremsklotz-Bremsanordnung eine weitere Baugrößenreduzierung bewirkt.

Die Erfindung wird nachfolgend anhand eines bevorzugten Ausführungsbeispiels unter Bezugnahme auf die Zeichnung erläutert. In der Zeichnung zeigen:
Fig. 1 eine Seitenansicht eines Drehgestells mit Verbindungseinrichtungen zum Verbinden mit einem 2-Wege-Fahrzeug;

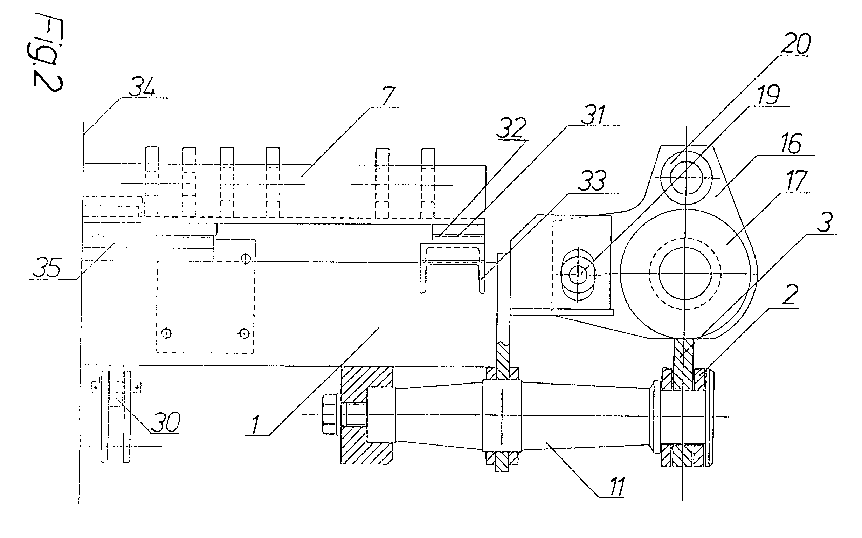

Fig. 2 einen in Fig. 3 mit A-B bezeichneten Teilschnitt des Drehgestells;
Fig. 3 eine Draufsicht auf ein Drehgestell ohne Verbindungseinrichtungen; und
Fig. 4 einen in Fig. 3 mit C-D bezeichneten Querschnitt durch die Drehgestell-Längsmitte.

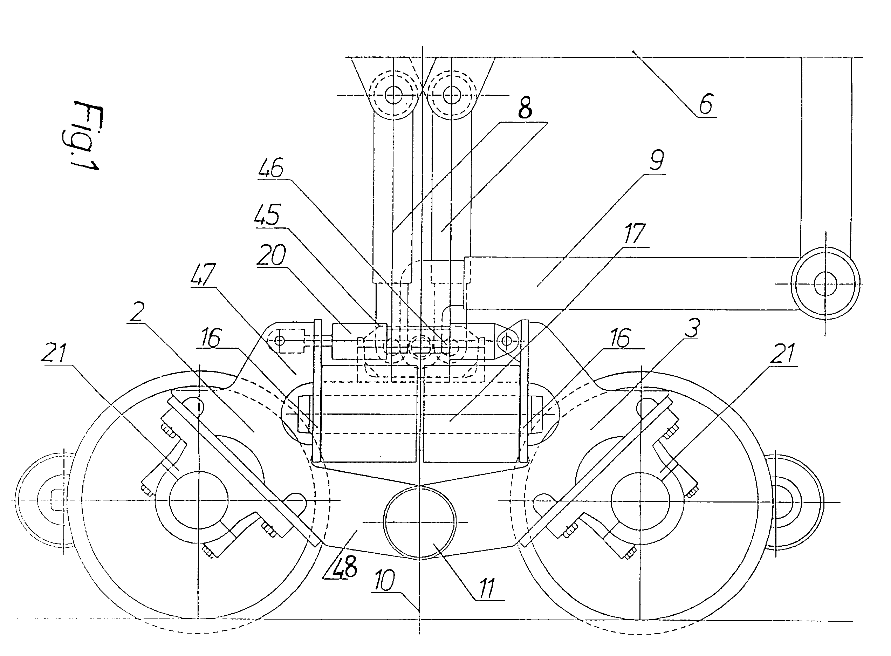

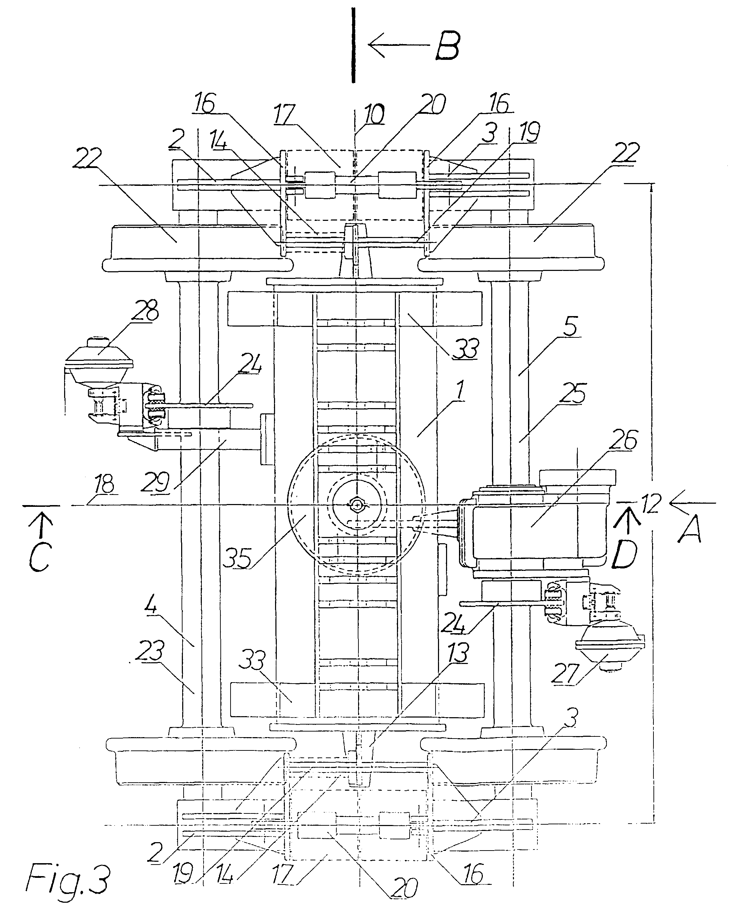

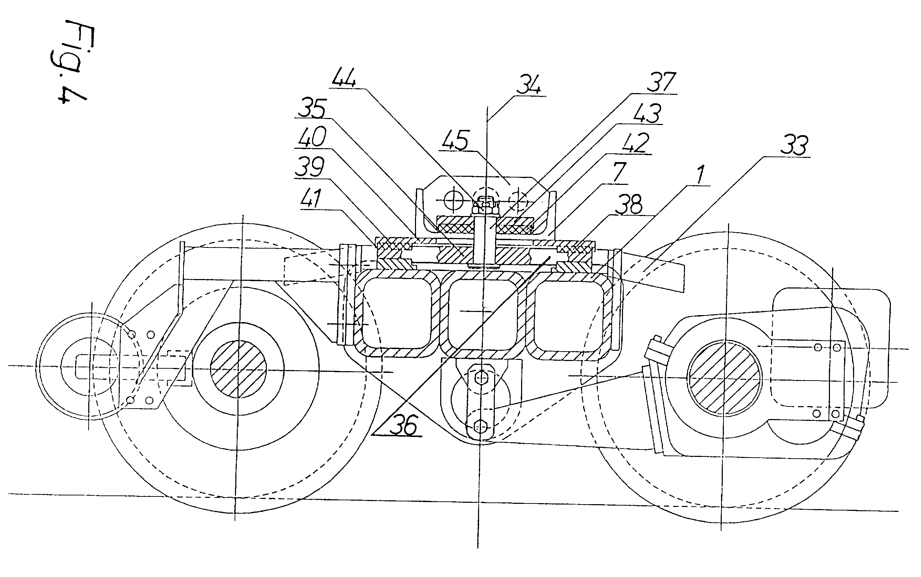

Fig. 3 zeigt eine Draufsicht des Drehgestells, welches die grundsätzlichen Elemente Drehgestell-Querträger 1, erste, gezogene Schwinge 2 bei Fahrtrichtung nach rechts bezogen auf Fig. 3 und zweite, geschobene Schwinge 3 bei Fahrtrichtung nach rechts bezogen auf Fig. 3, sowie einen ersten Radsatz 4, welcher als Laufradsatz ausgebildet ist, und einen zweiten Radsatz 5, welcher als angetriebener Radsatz ausgebildet ist, aufweist. Weiter sind Verbindungseinrichtungen zur Transporteinheit 6 vorgesehen, wie aus der Fig. 1 entnehmbar ist. Wie aus Fig. 4 zu ersehen ist, können die Verbindungseinrichtungen mit einem Drehschemel 7 als Hydraulikzylinder ausgebildeten Heb-/Senk-Einrichtungen 8, sowie in erforderlicher Stückzahl Heb-/Senk-Führungen 9 aufweisen, welche auch gleichzeitig die Zug- und Bremskräfte und die Seitenführungskräfte zwischen dem Drehgestell und der Transporteinheit aufnehmen.

Am Drehgestell-Querträger 1 sind auf der Drehgestell-Quermitte 10 Schwingenlager-Bolzen 11 befestigt. Auf den Schwingenlager-Bolzen ist je eine Schwinge 2, 3 schwenkbar im Radlager-Mittenabstand 12 gelagert (Fig. 3). Weiter ist auf der Drehgestell-Quermitte 10 der Anschlag 13 am Drehgestell-Querträger 1 angebracht, welcher in Verbindung mit Federelementen 14 ein einseitiges Auskippen des Drehgestelles im angehobenen Zustand verhindert.

Die Federelemente 14 werden auf dem Achsgabelsteg-Bolzen 19 getragen, der gleichzeitig durch seine besondere Länge auf den Abstand von Hauptfedersatz-Tragplatte 16 abgestimmt ist und dazu dient, daß im unter das 2-Wege-Fahrzeug angehobenen Zustand des Drehgestells die beiden Radsätze 4 und 5 um ein definiertes Maß ausfedern können.

Je eine Schwinge 2, 3 stützt sich beim Einfedern der Radsätze 4 bzw. 5 über die Tragplatten 16 gegenseitig auf je einem der Hauptfederanordnungen 17 ab. Die Hauptfederanordnungs-Tragplatten 16 übertragen Kräfte von den Schwingen 2, 3, welche in Horizontalrichtung zur Drehgestell-Längsmitte 18 hin wirken. Parallel dazu sind Achsgabelstegbolzen 19 vorgesehen. Weiter sind Federblockierzylinder 20 vorgesehen, welche gleichzeitig als Schwingungsdämpfer dienen, indem eine externe Drossel an diesen Federblockierzylinder 20 angeschlossen ist, sowie Hydraulikleitungsanschlüsse an beiden Enden des Federblockierzylinders 20 vorgesehen sind, welche über eine einstellbare Drossel miteinander verbunden sind. In dieser Weise kann der Federblockierzylinder 20 auch als Schwingungsdämpfer eingesetzt werden, indem die Drossel auf eine definierte Öffnungsgröße eingestellt wird und so Hydrauliköl aus einer ersten Zylinderkammer, welche sich auf einer ersten Seite des Kolbens befindet, über die Drossel in die zweite Zylinderkammer strömen kann, welche sich auf einer zweiten Seite des Kolbens befindet.

Die Schwingen 2, 3 stützen sich über mit Pendelrollen-Wälzlagern ausgerüstete Radsatzlager 21 im Radsatzlager-Mittenabstand 12 auf den außen gelagerten Radsätzen 4 und 5 ab. In der Laufradsatzausführung besteht der Radsatz 4 im wesentlichen aus ein- oder mehrteiligen Rädern 22, einer Radsatzwelle 23, einer Bremsscheibe 24, welche auch als mehrteilige Bremsscheibe 24 ausgebildet sein kann. Analog besteht die Treibradsatzausführung des Radsatzes 5 im wesentlichen aus einer Radsatzwelle 25 und dem hierauf angebauten Radsatzgetriebe 26 mit angebauter Bremseinheit 27.

Eine entsprechende Bremseinheit 28 ist auch bei dem in Laufradsatzausführung ausgebildeten Radsatz 4 vorgesehen. Dabei ist die Bremseinheit 28 über einen Träger 29 mit dem Drehgestell-Querträger 1 verbunden. Weiter sind am Drehgestell-Querträger 1 Befestigungen 30 angebaut, welche zur Aufnahme der Reaktionskräfte aus dem Drehmoment dienen, welches das Radsatzgetriebe 26 auf den angetriebenen Radsatz 5 ausübt. Darüberhinaus sind mehrteilige, einstellbare Wankstützen 31 an dem Drehgestell-Querträger 1 angebaut, welche zu dem Drehschemel 7 hin wirken und somit dazu dienen, den Wankwinkel in engen Grenzen zu beschränken, was insbesondere bei mit einem Kran ausgerüsteten Fahrzeugen sowie mit einer Arbeitsbühne ausgerüsteten Fahrzeugen unbedingt erforderlich ist. So ist die Wankstütze 31 mit einem Spalt 32 versehen, welcher in der dargestellten, bevorzugten Ausführungsform nur eine Breite von einem Millimeter aufweist. Bei Sonderfahrzeugen wie 2-Wege-Lastkraftwagen ist das Fahrzeug selbst etwas weniger steif wie herkömmliche Eisenbahnwaggons, so daß ein Ausgleich bei Einfahrt in Kurven mit Überhöhung auch im geringen Maße durch die Torsion des Fahrzeugkörpers selbst erzielt werden kann.

Weiter sind Einfahrhilfen 33 an dem Drehzapfen-Querträger 1 angebaut, welche das Drehen des Drehgestelles um die vertikale Achse 34, d. h. um den Drehzapfen 35, erleichtern.

Der hier dargestellte Drehzapfen 35 setzt sich zusammen aus einer Grundplatte 36 zur Aufnahme aller Vertikal- und Horizontalkräfte, wobei diese Grundplatte 36 an den Drehgestell-Querträger 1 angeschraubt ist. In der Grundplatte 36 ist der Tragbolzen 37 aufgenommen, sowie die große Gleitplatte 38 aufgenommen, welche an der Grundplatte 36 angeschraubt ist. Die Gleitplatte 38 weist eine Gleitfläche 39 auf, welche mittels einer oberen Deckplatte 40 vor Schmutz geschützt wird. Ein Umfangsrand 41, welcher die Deckplatte 40 umgrenzt, dient sowohl zur Kräfteübertragung, als auch zum Schutz gegen das Eindringen von Schmutz zwischen die Deckplatte 40 und die Gleitfläche 39.

Bei der gezeigten Ausführungsform stützt sich auf der oberen Deckplatte 40 der Drehschemel 7 ab, welcher seinerseits zum Zwecke der Transportaufhängung des Drehgestelles über eine an diesem befestigte, kleine Gleitplatte 42, eine Deckscheibe 43 und eine speziell am Tragbolzen 37 befestigte Mutter 44 das gesamte Drehgestell trägt.

Für die Verbindung zwischen dem Drehschemel 7 und der Transporteinheit (beispielsweise dem Zwei-Wege-Straßen/Schienen-Fahrzeug 6) mittels der Heb-/Senk-Einrichtungen 8, welche hier als Hydraulik-Teleskopzylinder ausgebildet sind, beziehungsweise mittels der Heb-/Senk-Führungen 9, wurde in diesem Ausführungsbeispiel eine Verbindung mittels einer Konsole 45 und einem Bolzen 46 gewählt.

Wie weiter insbesondere aus Fig. 4 zu erkennen ist, ist der Drehgestell-Querträger 1 aus Hohlprofilen zusammengesetzt, beispielsweise aus drei Quadratrohren zusammengeschweißt, wodurch sich eine relativ einfache, aber steife Konstruktion ergibt.

Die Funktion des Drehgestells ist derart, daß die Schwingen 2 und 3 um den Schwingenlager-Bolzen 11 schwenken können und dabei die Hauptfederanordnungen 17 gegen eine Federkraft zusammenpressen. Die Federkraft wird von den Hauptfedersatz-Tragplatten 16 auf die Schwingen 2 beziehungsweise 3 übertragen, genau genommen auf das zweite Ende des oberen, vertikalen Schenkels 47 der jeweiligen Schwinge übertragen, wie Fig. 1 zeigt. Parallel zu den Hauptfederanordnungen 17 verlaufen die Federblockierzylinder, welche von dem Federblockier-Betriebsmodus auf den Schwingungsdämpfungs-Modus umgeschaltet werden können, und ebenfalls an dem zweiten freien Ende der Schwinge 2 beziehungsweise 3, d. h. am äußeren Ende des Schenkels 47 angelenkt sind. Der untere im wesentlichen horizontal verlaufende Schenkel 48 endet in dem Schwingenlager-Bolzen 11. Das Radsatzlager 21 ist im wesentlichen an der Stelle angeordnet, an welcher sich der vertikale Schenkel 47 und der horizontale Schenkel 48 schneiden. Der im wesentlichen horizontale Schenkel 48 verläuft leicht nach unten geneigt, so daß der Mittelpunkt des Schwingenlager-Bolzens 11 unterhalb der Radachse angeordnet ist, wodurch sich ein großer Bauraum zum Unterbringen der Hauptfederanordnungen und weiterer Funktionselemente wie den Federblockierzylindern 20 und den Federlementen 14 ergibt, ohne daß sich dabei die Gesamtbauhöhe des Drehgestells erhöht.

## Patentansprüche

1. Zweiachsiges Schienenfahrzeug-Drehgestell mit zwei in Radsatzlagern außengelagerten Radsätzen, und einem Drehgestell-Rahmen, an welchem die Radsätze federnd gelagert sind, wobei der lastaufnehmende Teil des Drehgestell-Rahmens im wesentlichen aus einem Drehgestell-Querträger (1) besteht, an welchen auf einer ersten Drehgestellseite eine erste Schwinge (2) für einen ersten der beiden Radsätze und auf einer zweiten Drehgestellseite eine zweite Schwinge (3) für den anderen, zweiten Radsatz angelenkt ist, wobei sowohl die erste, als auch die zweite Schwinge (2 bzw. 3) jeweils ein erstes freies Ende aufweist, welches an den Drehgestell-Querträger (1) um einen Schwenkpunkt schwenkbar angelenkt ist, dadurch gekennzeichnet, daß die erste und zweite Schwinge (2 bzw. 3) jeweils ein zweites freies Ende aufweist, welches an eine Hauptfederanordnung (17) angelenkt ist, wobei das jeweilige Radsatzlager (21) an einer Stelle zwischen dem ersten und zweiten freien Ende angeordnet ist, beide Schwingen (2, 3) um einen gemeinsamen Lagerpunkt schwenkbar sind und einen oberen, in dem zweiten freien Ende endenden Schenkel (47) aufweisen, dessen zweites Ende sich oberhalb einer Rotationsachse der Radsätze befindet, und die Hauptfederanordnung (17) derart angeordnet ist, daß sie im wesentlichen in Horizontalrichtung wirkende Federkräfte auf das jeweilige zweite freie Ende ausübt.

2. Drehgestell nach Anspruch 1, dadurch gekennzeichnet, daß die erste Schwinge (2) und die zweite Schwinge (3) einander identisch sind und beide Schwingen (2, 3) in der Seitenansicht im, wesentlichen die Form eines Winkels aufweisen, wobei zusätzlich zu dem oberen Schenkel (47) ein unterer, in dem ersten freien Ende endender Schenkel (48) vorgesehen ist, welcher im wesentlichen horizontal verläuft, wobei das Radsatzlager (21) im wesentlichen am Schnittpunkt der beiden Schenkel (47, 48) angeordnet ist.

3. Drehgestell nach einem der Ansprüche 1 oder 2, dadurch gekennzeichnet, daß sich je eine Hauptfederanordnung (17) der ersten bzw. zweiten Schwinge (2 bzw. 3) ausgehend von dem jeweiligen zweiten freien Ende im wesentlichen in Horizontalrichtung erstreckt, so daß beide Hauptfederanordnungen (17) zwischen den zweiten freien Enden der einander benachbarten ersten bzw. zweiten Schwinge (2 bzw. 3) angeordnet sind.

4. Drehgestell nach einem der Ansprüche 1 oder 2, dadurch gekennzeichnet, daß sich eine einzige Hauptfederanordnung (17) ausgehend von dem zweiten freien Ende der ersten Schwinge (2) zu dem zweiten freien Ende der zweiten Schwinge (3) im wesentlichen in Horizontalrichtung erstreckt und so die zweiten Enden beider Schwingen (2 bzw. 3) miteinander verbindet.

5. Drehgestell nach einem der vorangehenden Ansprüche, dadurch gekennzeichnet, daß der jeweilige Schwenkpunkt am ersten freien Ende der ersten, wie auch der zweiten Schwinge (2 bzw. 3) tiefer als die Radachse des ersten bzw. zweiten Radsatzes (4 bzw. 5) liegt.

6. Drehgestell nach einem der vorangehenden Ansprüche, dadurch gekennzeichnet, daß neben der jeweiligen Hauptfederanordnung (17) im wesentlichen parallel dazu verlaufend am zweiten Ende jeder der Schwingen (2, 3) zusätzlich ein hydraulischer Federblockierzylinder (20) angeordnet ist.

7. Drehgestell nach einem der Ansprüche 1 bis 5, dadurch gekennzeichnet, daß neben der jeweiligen Hauptfederanordnung (17) im wesentlichen parallel dazu verlaufend ein einziger hydraulischer Federblockierzylinder (20) vorgesehen ist, welcher sich ausgehend von dem zweiten freien Ende der ersten Schwinge (2) zu dem zweiten freien Ende der zweiten Schwinge (3) im wesentlichen in Horizontalrichtung erstreckt und so die zweiten Enden beider Schwingen (2 bzw. 3) miteinander verbindet.

8. Drehgestell nach Anspruch 6 oder 7, dadurch gekennzeichnet, daß die hydraulischen Federblockierzylinder (20) von ihrem Federblockier-Betriebsmodus auf einen Schwingungsdämfungs-Betriebsmodus umschaltbar sind, wozu die Federblockierzylinder (20) an eine externe Drossel angeschlossen sind.

9. Drehgestell nach einem der vorangehenden Ansprüche, dadurch gekennzeichnet, daß Wankstützen vorgesehen sind, welche den Wankwinkel des Drehgestells relativ zu dem Fahrzeug begrenzen.

10. Drehgestell nach Anspruch 9, dadurch gekennzeichnet, daß der Wankwinkel auf 2° begrenzt ist.

11. Drehgestell nach einem der vorangehenden Ansprüche, dadurch gekennzeichnet, daß die Hauptfederanordnungen (17) Elastomerfedern aufweisen.

12. Drehgestell nach einem der vorangehenden Ansprüche, dadurch gekennzeichnet, daß die Hauptfederanordnungen (17) Tellerfedern aufweisen.

13. Drehgestell nach Anspruch 11 oder 12, dadurch gekennzeichnet, daß die Hauptfederanordnungen (17) für verschiedene Achslasten austauschbar sind und alle die gleiche Einbaulänge unter spezifischer statischer Belastung aufweisen.

14. Drehgestell nach einem der vorangehenden Ansprüche, dadurch gekennzeichnet, daß die Hauptfederanordnungen (17) schwingenseitig an Hauptfederanordnungs-Tragplatten (16) befestigt sind, die Hauptfederanordnungen (17) der ersten und zweiten Schwinge (2 bzw. 3) horizontal und koaxial zueinander angeordnet sind und jede der Hauptfederanordnungen (17) auf einer Führungssäule ausknicksicher geführt ist, welche in den Hauptfedersatz-Tragplatten (16) gelagert ist, wobei die Führungssäule in ihrer Längsmitte einen Bund besitzt, mittels welchem die Führungssäule von den Hauptfederanordnungen (17) getragen wird.

15. Drehgestell nach einem der vorangehenden Ansprüche, dadurch gekennzeichnet, daß das Drehgestell über einen Drehzapfen mittels Gleitplatte (42), Deckscheibe (43), Mutter (44) und Tragbolzen (37) unter Sonderfahrzeugen angehoben und transportiert werden kann.

16. Drehgestell nach Anspruch 15, dadurch gekennzeichnet, daß das Drehgestell mittels eines hydraulischen Teleskoparms unter das Sonderfahrzeug gezogen werden kann.

17. Drehgestell nach einem der vorangehenden Ansprüche, dadurch gekennzeichnet, daß wenigstens einer der beiden Radsätze (4 bzw. 5) ein mittels eines Hydrostatik-Motors angetriebener Radsatz ist, wobei der Motor als Radmotor oder Achsgetriebemotor ausgebildet ist.

18. Drehgestell nach einem der vorangehenden Ansprüche, dadurch gekennzeichnet, daß wenigstens einer der Radsätze mit einer Scheibenbremse versehen ist.

## Claims

1. A twin-axle rail vehicle bogie with two wheel sets externally supported in wheel set bearings and a bogie frame on which the wheel sets are sprung, with the load-bearing part of the bogie frame consisting essentially of a bogie cross beam (1) to which are hingedly connected on a first bogie side a first link (2) for a first of the two wheel sets and on a second bogie side a second link (3) for the other, second wheel set, with both the first and the second link (2, 3) having a first free end which is hingedly connected to the bogie cross beam (1) in such a manner that it is pivotal about a hinge point, characterized in that the first and second links (2, 3) have a second free end hingedly connected to a main suspension system (17), with the respective wheel set bearing (21) being arranged at a point between the first and second free ends and with both links (2, 3) being pivotal about a common pivot and having an upper shank (47) which ends at the second free end and the second end of which is located above an axis of rotation of the wheel sets, and with the main suspension system (17) being arranged in such a way that it exerts substantially horizontally acting spring forces on the respective second free end.

2. A bogie according to claim 1, characterized in that the first link (2) and the second link (3) are identical, and both links (2, 3) substantially have the form of an angle as seen from the side, with a lower shank (48) ending in the first free end and extending substantially horizontally being provided in addition to the upper shank (47), with the wheel set bearing (21) being substantially arranged at the intersection of the two shanks (47, 48).

3. A bogie according to anyone of the claims 1 or 2, characterized in that a main suspension system (17) of each of the first and second links (2, 3), respectively, extends from the respective second free end in a substantially horizontal direction so that the two main suspension systems (17) are arranged between the second free ends of adjacent first and second links (2, 3).

4. A bogie according to anyone of the claims 1 to 2, characterized in that a single main suspension system (17) extends in a substantially horizontal direction from the second free end of the first link (2) to the second free end of the second link (3), thus connecting the second ends of the two links (2, 3) with each other.

5. A bogie according to anyone of the previous claims, characterized in that the respective hinge point at the first free end of the first, and also of the second, links (2, 3) is arranged below the wheel axis of the first and second wheel sets, respectively (4, 5).

6. A bogie according to anyone of the previous claims, characterized in that a hydraulic spring blocking cylinder (20) is additionally arranged at the second end of each link (2, 3) next to the respective main suspension system (17), extending substantially parallel thereto.

7. A bogie according to anyone of the claims 1 to 5, characterized in that a single hydraulic spring blocking cylinder (20) is provided next to the respective main suspension system (17) and extends substantially parallel thereto, with said hydraulic spring blocking cylinder (20) extending from the second free end of the first link (2) to the second free end of the second link (3) in a substantially horizontal direction, thus connecting the second ends of the two links (2, 3) with each other.

8. A bogie according to claim 6 or 7, characterized in that the hydraulic spring blocking cylinders (20) may be switched over from their spring-blocking mode of operation to a oscillation-damping mode of operation, for which purpose the spring blocking cylinders (20) are connected to an external throttle.

9. A bogie according to anyone of the previous claims, characterized in that anti-rolling members are provided which limit the rolling angle of the bogie relative to the vehicle.

10. A bogie according to claim 9, characterized in that the rolling angle is limited to 2°.

11. A bogie according to anyone of the previous claims, characterized in that the main suspension systems (17) comprise elastomer springs.

12. A bogie according to anyone of the previous claims, characterized in that the main suspension systems (17) comprise cup springs.

13. A bogie according to claim 11 or 12, characterized in that the main suspension systems (17) are interchangeable for different axle loads and have identical fitting lengths for a specific static load.

14. A bogie according to anyone of the previous claims, characterized in that the main suspension systems (17) are attached to main suspension system support plates (16) on the side of the links, that the main suspension systems (17) of the first and second links (2, 3) are horizontally and coaxially arranged and that each of the main suspension systems (17) is guided on a guiding column rendering it buckleproof, with the guiding column being supported in the main suspension system support plates (16) and comprising a collar at its longitudinal centre by means of which the guiding column is supported by the main suspension systems (17).

15. A bogie according to anyone of the previous claims, characterized in that the bogie may be lifted and moved via a pivot pin by means of a sliding plate (42), a cover disk (43), a nut (44) and a load-bearing bolt (37) when used under special vehicles.

16. A bogie according to claim 15, characterized in that the bogie can be pulled under the special vehicle by means of a hydraulic telescopic arm.

17. A bogie according to anyone of the previous claims, characterized in that at least one of the two wheel sets (4, 5) is driven by means of a hydrostatic motor, with the motor being designed as a wheel-type motor or as an axle-transmission-type motor.

18. A bogie according to anyone of the previous claims, characterized in that at least one of the wheel sets is provided with a disk brake.

## Revendications

1. Bogie de véhicule ferroviaire à deux essieux, comportant deux essieux montés, qui sont installés extérieurement dans des paliers d'essieux montés, et un châssis de bogie, sur lequel les essieux montés sont supportés élastiquement, dans lequel la partie, qui supporte la charge, du châssis de bogie est constituée essentiellement par une traverse de bogie (1), sur laquelle un premier balancier (2) pour un premier des deux essieux montés est articulé sur un premier côté du bogie et un second balancier (3) pour le second essieu monté est articulée, sur un second côté du bogie, et dans lequel aussi bien le premier balancier que le second balancier (2 et 3) comportent chacun une première extrémité libre qui est articulée sur la traverse de bogie (1) de manière à pouvoir pivoter autour d'un centre de gravité, caractérisé en ce que les premier et second balanciers (2 et 3) comportent chacun une seconde extrémité libre qui est articulée sur un dispositif de ressort principal (17) et dans lequel le palier respectif (21) d'essieu monté est disposé en un emplacement situé entre les première et seconde extrémités libres, les deux balanciers (2, 3) peuvent pivoter autour d'un point de support commun et comportent une branche supérieure (47), qui se termine par la seconde extrémité libre et dont la seconde extrémité est située au-dessus d'un axe de rotation des essieux montés, et le dispositif de ressort principal (17) est disposé de telle sorte qu'il applique à la seconde extrémité libre respective, des forces agissant essentiellement dans la direction horizontale.

2. Bogie selon la revendication 1, caractérisé en ce que le premier balancier (2) et le second balancier (3) sont identiques et que les deux balanciers (2, 3) possèdent, selon une vue en élévation latérale, essentiellement la forme d'une cornière, et dans lequel il est prévu, en plus de la branche supérieure (47), une branche inférieure (48) qui se termine par la première extrémité libre et qui s'étend essentiellement horizontalement, et le palier (21) d'essieu monté est disposé sensiblement au point d'intersection des deux branches (47, 48).

3. Bogie selon l'une des revendications 1 ou 2, caractérisé en ce qu'un dispositif de ressort principal respectif (17) du premier ou du second balancier (2 ou 3) s'étend à partir de la seconde extrémité libre respective, essentiellement dans la direction horizontale de telle sorte que les deux dispositifs à ressorts principaux (17) sont disposés entre les secondes extrémités libres des premier et second balanciers (2 ou 3), qui sont réciproquement voisins.

4. Bogie selon l'une des revendications 1 ou 2, caractérisé en ce qu'un seul dispositif à ressort principal (17) s'étend essentiellement dans la direction horizontale à partir de la seconde extrémité libre du premier balancier (2) jusqu'à la seconde extrémité libre du second balancier (3), et relie ainsi entre elles les secondes extrémités des deux balanciers (2 ou 3).

5. Bogie selon l'une des revendications précédentes, caractérisé en ce que le point respectif de pivotement est situé sur la première extrémité du premier balancier ainsi que du second balancier (2 et 3) à un niveau plus bas que l'axe des roues des premier et second essieux montés (4 et 5).

6. Bogie selon l'une des revendications précédentes, caractérisé en ce qu'en dehors du dispositif de ressort principal respectif (17), un vérin hydraulique de blocage de ressort (20) est disposé en supplément de manière à s'étendre essentiellement parallèlement au dispositif de ressort principal, sur la seconde extrémité de chacune des balanciers (2, 3).

7. Bogie selon l'une des revendications 1 à 5, caractérisé en ce qu'en dehors du dispositif de ressort principal respectif (17), il est prévu un seul vérin hydraulique de blocage de ressort (20), qui s'étend essentiellement parallèlement au dispositif de ressort principal et s'étend essentiellement dans la direction horizontale à partir de la seconde extrémité libre du premier balancier (2) en direction de la seconde extrémité libre du second balancier (3) et relie ainsi entre elles les deux extrémités des deux balanciers (2 et 3).

8. Bogie selon la revendication 6 ou 7, caractérisé en ce que les vérins hydrauliques de blocage de ressort (20) peuvent être commutés de leur mode de fonctionnement de blocage de ressort à un mode de fonctionnement d'amortissement d'oscillations et à cet effet les vérins de blocage de ressort (20) sont raccordés à un organe d'étranglement externe.

9. Bogie selon l'une des revendications précédentes, caractérisé en ce qu'il est prévu des supports anti-roulis, qui limitent l'angle de roulis du bogie par rapport au véhicule.

10. Bogie selon la revendication 9, caractérisé en ce que l'angle de roulis est limité à 2°.

11. Bogie selon l'une des revendications précédentes, caractérisé en ce que les dispositifs à ressorts principaux (17) comportent des ressorts élastomères.

12. Bogie selon l'une des revendications précédentes, caractérisé en ce les dispositifs de ressorts principaux (17) comportent des ressorts Belleville.

13. Bogie selon la revendication 11 ou 12, caractérisé en ce que les dispositifs de ressorts principaux (17) peuvent être remplacés pour différentes charges d'essieux et que tous possèdent la même longueur de montage sous une charge statique spécifique.

14. Bogie selon l'une des revendications précédentes, caractérisé en ce que les dispositifs de ressorts principaux (17) sont fixés, du côté des balanciers, sur des plaques de support (16) des dispositifs de ressorts principaux, que les dispositifs de ressorts principaux (17) des premier et second balanciers (2 et 3) sont disposés horizontalement et coaxialement l'un à l'autre et que chacun des dispositifs de ressorts principaux (17) est guidé d'une manière protégée contre un coudage, sur une colonne de guidage qui est montée dans les plaques de support (16) des ensembles de ressorts principaux, la colonne de guidage possédant, au milieu de sa longueur, un collet, à l'aide duquel la colonne de guidage est portée par les dispositifs de ressorts principaux (17).

15. Bogie selon l'une des revendications précédentes, caractérisé en ce que le bogie peut être soulevé au-dessous de véhicules spéciaux par l'intermédiaire d'un pivot rotatif au moyen d'une plaque coulissante (42), d'un disque de protection (43), d'un écrou (44) et d'un boulon de support (37) et être transporté.

16. Bogie selon la revendication 15, caractérisé en ce que le bogie peut être rétracté au-dessous du véhicule spécial à l'aide d'un bras télescopique hydraulique.

17. Bogie selon l'une des revendications précédentes, caractérisé en ce qu'au moins l'un des deux essieux montés (4, 5) est un essieu monté, qui est entraîné par un moteur hydrostatique, le moteur étant agencé sous la forme d'un moteur de roue ou d'un moteur de transmission d'essieu.

18. Bogie selon l'une des revendications précédentes, caractérisé en ce qu'au moins l'un des essieux montés est équipé d'un frein à disque.
